Europäisches Patentamt

European Patent Office

Office européen des brevets

(11) Numéro de publication : **0 169 096 B1**

# FASCICULE DE BREVET EUROPÉEN

(45) Date de publication du fascicule du brevet :
25.03.87

(21) Numéro de dépôt : **85401116.0**

(22) Date de dépôt : **06.06.85**

(51) Int. Cl.⁴ : **B 60 N    1/06**

(54) Dispositif de blocage rapide d'un siège articulé.

(30) Priorité : **15.06.84 FR 8409418**
**22.05.85 FR 8507699**

(43) Date de publication de la demande :
**22.01.86 Bulletin 86/04**

(45) Mention de la délivrance du brevet :
**25.03.87 Bulletin 87/13**

(84) Etats contractants désignés :
**AT BE CH DE GB IT LI LU NL SE**

(56) Documents cités :
**DE-A- 2 323 640**
**DE-A- 3 205 133**
**FR-A- 2 350 982**
**GB-A- 1 422 063**
**US-A- 3 216 766**
**US-A- 3 237 987**
**US-A- 3 426 386**
**US-A- 3 517 965**
**US-A- 3 523 593**
**US-A- 4 294 488**

(73) Titulaire : **A. & M. Cousin et Cie**
**Le Bois de Fiers**
**F-61103 Fiers Cédex Orne (FR)**

(72) Inventeur : **Pipon, Yves**
**La Garenne St Georges des Groseillers**
**F-61100 Fiers (FR)**
Inventeur : **Droulon, Georges**
**rue de la Garenne St Georges des Groseillers**
**F-61100 Fiers (FR)**

(74) Mandataire : **Madeuf, Claude Alexandre Jean et al**
**CABINET MADEUF 3, avenue Bugeaud**
**F-75116 Paris (FR)**

EP 0 169 096 B1

## Description

On utilise, pour le réglage de l'inclinaison des dossiers de sièges de véhicules et, en particulier, de véhicules automobiles, des ferrures qui permettent le réglage en inclinaison soit d'une manière discontinue, soit d'une façon continue mais, par mesure d'économie, le dispositif est monté d'un seul côté du siège et, de l'autre côté, le dossier est articulé sur un axe simple.

De plus, lorsque l'on utilise des dispositifs discontinus, on est amené à installer, entre l'assise et le dossier du siège, un ressort de rappel tendant à ramener le dossier du siège contre le dos de l'utilisateur, conformément au préambule de la revendication 1.

Tous ces montages connus de ferrures sont, d'une part, compliqués et, d'autre part, difficilement mis en place sur les sièges nécessitant des adaptations pour chaque type de sièges ce qui rend ces produits coûteux et, de plus, encombrants et disgracieux.

La présente invention a cherché à remédier à toutes ces difficultés en créant un dispositif de blocage rapide se substituant à la ferrure des articulations réalisé de manière que la majorité des pièces puisse être employée dans tous les cas quel que soit le type des articulations utilisées, le type du siège ou le type de véhicules d'où une énorme économie puisque ces dispositifs sont quasiment universels en incorporant même le ressort de rappel du dossier lorsque l'on utilise, pour le réglage de l'inclinaison du dossier du siège, une ferrure discontinue.

De même et si cela est nécessaire, on peut également employer un groupe motoréducteur commandant le déplacement de la ferrure réglant l'inclinaison du dossier du siège en utilisant également le dispositif de blocage conforme à la présente invention.

Conformément à l'invention, le dispositif de blocage rapide se caractérise en ce que ce boîtier est en étoile et maintient au moins un axe qui porte un palonnier aux extrémités duquel sont montés des galets fous présentant une surface extérieure striée, galets placés entre la face extérieure du boîtier en étoile et la face intérieure du boîtier extérieur, ces galets étant entraînés par inertie au moment d'un choc par leur propre poids et également par la rotation du boîtier extérieur sous l'action du pivotement du dossier de siège, ce qui provoque le blocage du boîtier extérieur mobile par rapport au boîtier fixe en étoile solidaire de l'assise du siège par pénétration des galets fous de blocage entre les deux boîtiers précités.

Suivant une autre caractéristique de l'invention, le dispositif comporte une coupelle extérieure solidaire de l'armature du dossier par l'intermédiaire d'un boîtier extérieur dans lequel est placé un boîtier conformé contenant l'organe de blocage par inertie composé de deux galets à surface extérieure striée et reliés par un organe de maintien, le boîtier extérieur solidaire de l'armature du dossier pouvant tourner sous l'action d'une ferrure de réglage d'inclinaison et présentant également, dans le cas du basculement rapide du dossier vers l'avant, deux fentes arquées diamétralement opposées dans lesquelles se déplacent des bossages solidaires de la ferrure d'articulation et dans le cas où il n'y a pas de basculement rapide du dossier vers l'avant, les fentes arquées ci-dessus étant remplacées par des trous dans lesquels viennent se centrer des doigts de positionnement sortis de la ferrure d'articulation.

Suivant une autre particularité de l'invention, le dispositif comprend supplémentairement une biellette solidaire d'une double came portant sur deux éléments de blocage des bossages.

Diverses autres caractéristiques de l'invention ressortent d'ailleurs de la description détaillée qui suit.

Des formes de réalisation de l'objet de l'invention sont représentées à titre d'exemples non limitatifs, au dessin annexé.

La figure 1 est une élévation, partie en coupe, du dispositif de blocage rapide.

La figure 2 est une coupe diamétrale sensiblement suivant la ligne II-II de la fig. 1.

La figure 3 est un schéma de montage.

La figure 4 est une variante du schéma de montage de la fig. 3.

La figure 5 est une élévation de face, partie en coupe, du dispositif de blocage rapide d'un siège articulé à pivotement rapide vers l'avant.

La figure 6 est une coupe suivant la ligne VI-VI de la fig. 5.

La figure 7 est une élévation de face, partie en coupe, du dispositif de blocage rapide d'un siège articulé sans pivotement rapide vers l'avant.

La figure 8 est une coupe suivant la ligne VIII-VIII de la fig. 7.

La figure 9 est une élévation de face, partie en coupe, du dispositif de blocage rapide d'un siège articulé à pivotement rapide vers l'avant avec déblocage rapide de sécurité permettant le basculement du dossier lorsque les galets sont coincés entre la coupelle et le boîtier.

La figure 10 est une coupe suivant la ligne X-X de la fig. 9.

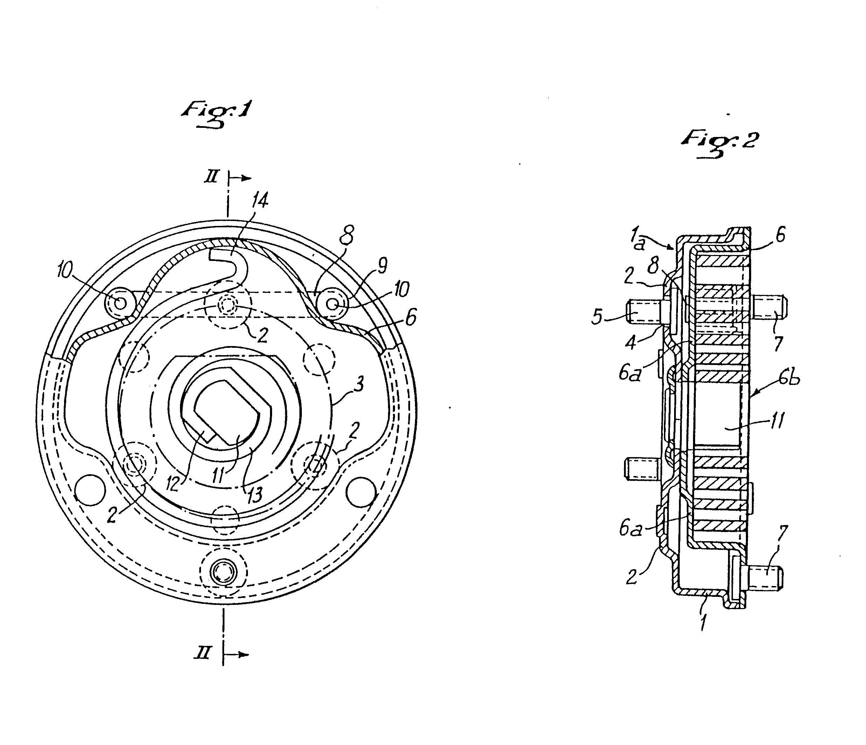

A la fig. 1, le dispositif est constitué principalement par un boîtier extérieur cylindrique 1 dont le fond 1a est conformé pour réaliser des cuvettes cylindriques 2 disposées sur un cercle imaginaire 3.

Le boîtier extérieur 1 est relié par des boulons 5, passant à travers les trous 4 percés dans les cuvettes 2, à l'armature du dossier (non représenté). Dans le cas présent, les boulons 5 sont disposés à 120° les uns des autres mais ils pourraient être, par exemple, placés à 90°.

Un deuxième boîtier en étoile 6 est placé à l'intérieur du boîtier 1 et est fixe car il est relié par l'intermédiaire de boulons 7 à l'armature de l'assise (non représentée). Le nombre de boulons 7 est, dans le cas présent, de trois disposés à 120°.

De plus, dans le boîtier 6 est placé un palonnier 8 qui reçoit à ses extrémités libres, sur des axes 10, des galets fous 9. En général, la surface de roulement des galets 9 est striée. Le dispositif est fermé du côté 6b du boîtier 6 en général par l'armature de l'assise du siège.

Finalement, l'axe central 11, solidaire du boîtier extérieur 1 tournant, sert de point de fixation à l'extrémité 12 d'un ressort 13 dont l'autre extrémité 14 vient, par sa partie en U14, s'accrocher sur la partie interne périphérique du boîtier en étoile 6.

L'axe central 11 sert d'axe de rotation au dossier du siège considéré puisque cet axe central 11 est solidaire du boîtier tournant 1 maintenu sur la base de l'armature du dossier par les boulons 5.

Dans le cas où on utilise une ferrure discontinue sur l'autre côté du siège considéré, le ressort 13 maintient, du fait de sa tension initiale, une pression sur le dos de l'utilisateur puisque ce ressort tend à ramener ce dossier contre le dos de l'utilisateur.

Aussi, dans le cas où la ferrure discontinue est mal verrouillée ou qu'il se produit un choc brutal du véhicule au moment où la ferrure discontinue est libre pour une raison quelconque, il est facile de concevoir que, par inertie, la masse des galets fous 9 fait poursuivre la trajectoire des galets dans l'espace alors que le boîtier en étoile 6 solidaire de l'assise donc de la carrosserie du véhicule est arrêté dans l'espace, les galets 9 pénètrent alors dans la paroi extérieure du boîtier 6 en étoile et les tôles des boîtiers 1 et 6 sont déformées et parfois même déchirées en provoquant ainsi une absorption d'énergie évitant de trop gros traumatismes au passager.

Comme cela a été dit ci-dessus, dans le cas des articulations continues, c'est-à-dire en prise continuellement même pendant le réglage, le ressort 13 n'est pas nécessaire et peut donc être supprimé en allégeant ainsi l'ensemble du dispositif.

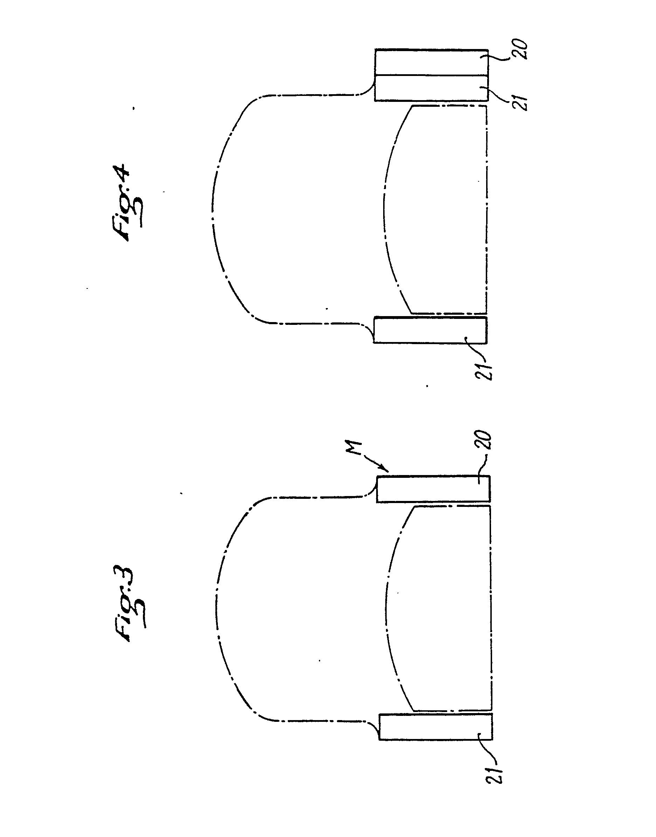

Bien que, comme cela a été représenté à la fig. 3, on monte normalement une seule ferrure-moteur 20 (continue ou discontinue) et un seul dispositif de blocage rapide 21 du type décrit aux fig. 1 et 2, il est possible, comme le montre la fig. 4, de placer à côté de la ferrure-moteur 20 qui est alors discontinue un dispositif de blocage rapide 21 comportant ou non un ressort 13. Ceci assure une sécurité totale des deux côtés du siège même en cas de choc pendant le réglage.

On obtient ainsi une sécurité absolue puisque quel que soit le type de la ferrure-moteur le dossier du siège est toujours verrouillé en cas de choc. Mais, de plus, ce dispositif évite l'augmentation de section des tôles pour la fabrication de la ferrure-moteur et la mise en place d'une barre de liaison en bas du dossier qui avait pour objet d'augmenter la résistance à la torsion sur le montant opposé à l'articulation. On obtient ainsi un ensemble d'articulations d'un poids réduit ce qui est très avantageux surtout dans les véhicules modernes dont la conception est d'éviter à tout prix le poids mort non nécessaire.

Dans certains cas, le dispositif de sécurité s'adapte directement sur l'assise d'un siège muni d'une articulation de rehaussement.

Pour une bonne compréhension d'une autre caractéristique de l'invention, on a schématisé aux fig. 5 à 10, l'armature du siège comprenant l'assise 102 et le dossier 116, ainsi que le mécanisme de basculement et de positionnement 103 du dossier qui pourra être d'un principe continu ou discontinu, à commande soit manuelle, soit motorisée.

Comme on peut s'en rendre compte aux fig. 5 à 10, le dispositif de blocage rapide se compose d'une coupelle 100 solidaire, par soudure, d'un boîtier 115 qui assure le maintien des galets fous striés 133, 134 entre leurs faces verticales sur le dispositif de blocage ou boîtier 130 rendu solidaire par soudure à la partie extérieure 106 du dispositif de positionnement 103 utilisé.

Les galets 133, 134 fous striés sont retenus dans l'intersection des deux rampes 131a, 141a et 132a, 142a par un arceau 135 aux extrémités recourbées qui rentrent dans des trous 123 et 124 réalisés dans les galets fous striés 133, 134. Les galets 133, 134 ne sont pas en contact avec le boîtier 115 (voir les fig. 5, 7 et 9).

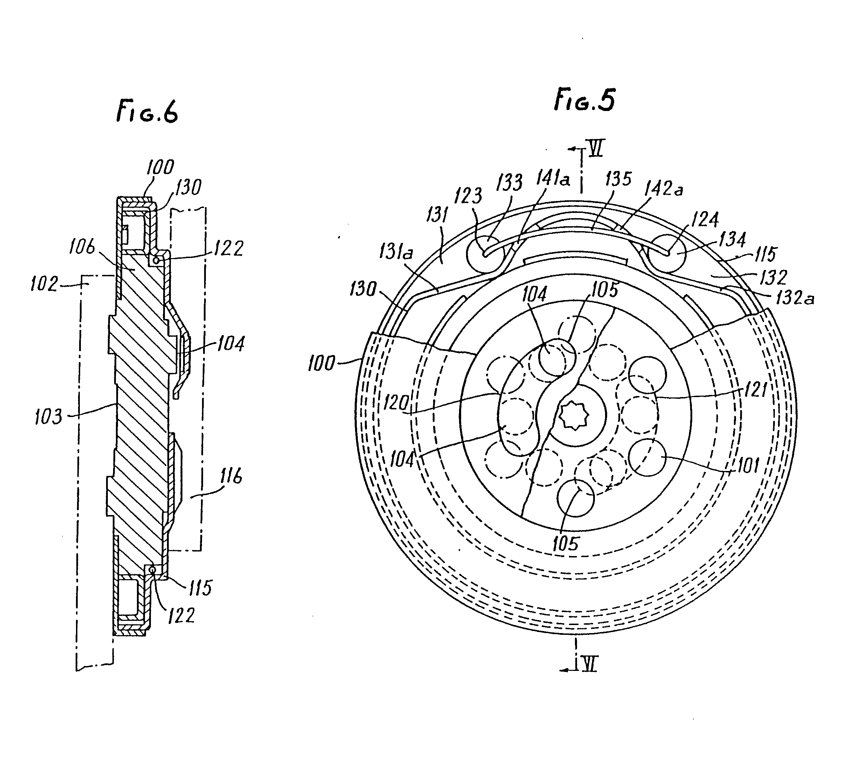

Pour permettre le passage des utilisateurs des sièges arrière d'un véhicule à deux portes, il est nécessaire que le dossier soit monté basculant vers l'avant, mais il faut également que le dossier soit bloqué vers l'avant lorsque le véhicule est soumis à un choc frontal. Le dispositif représenté aux fig. 5 et 6 remplit ces fonctions de positionnement par un mécanisme 103 venant par les bossages 104 toujours en position arrière au même endroit sur des butées 105 prévues sur le fond des fenêtres arquées 120, 121 formées dans le boîtier 115. Lorsqu'il y a choc sur le véhicule, les galets 133, 134 par leur inertie montent sur les rampes 141a, 132a ou 131a, 142a et viennent ensuite se coincer sur l'extérieur du boîtier 130 en empêchant ainsi la rotation du boîtier 115 et du dossier 116 qui en est solidaire.

Si le choc est très violent, la déformation du boîtier 130 et des rampes 131a, 141a, 132a, 142a par les galets 133, 134 assure une absorption de l'énergie.

Le débattement angulaire vers l'avant du dossier est facilité par une série de billes 122 qui sont disposées en périphérie sur le boîtier de fermeture des divers dispositifs de positionnement susceptibles d'être utilisés et qui viennent prendre appui sur l'intérieur du boîtier 115.

La disposition ci-dessus assure également, par la coopération des bossages 104 et des fenêtres arquées 120, 121, une position mémoire permettant que le dossier, après avoir pivoté sur l'assise, reprenne sa position d'origine.

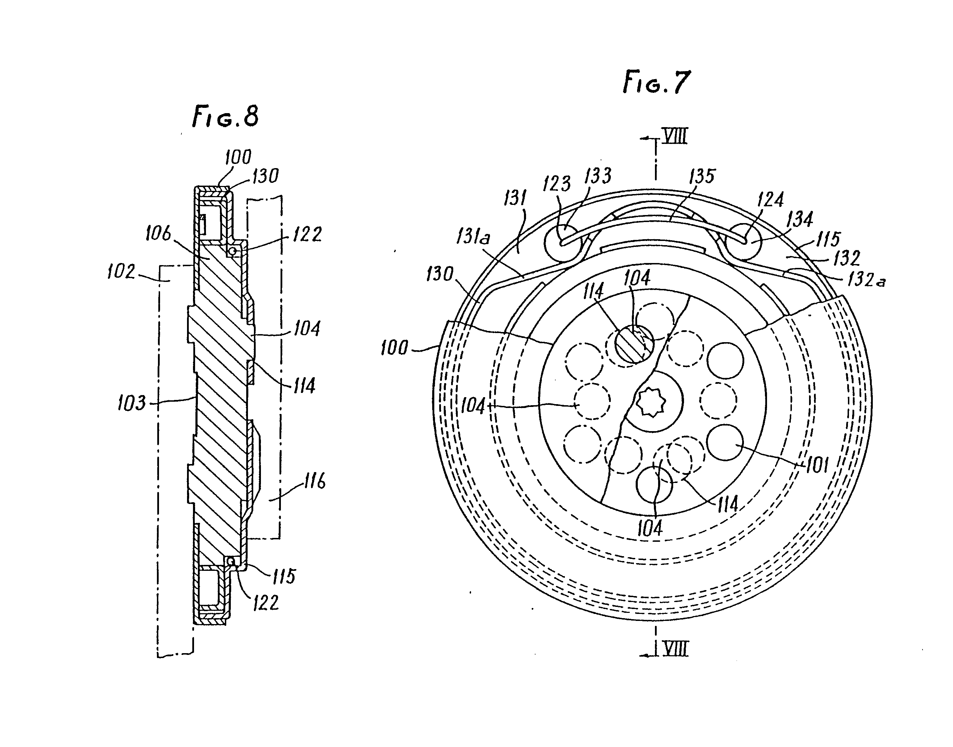

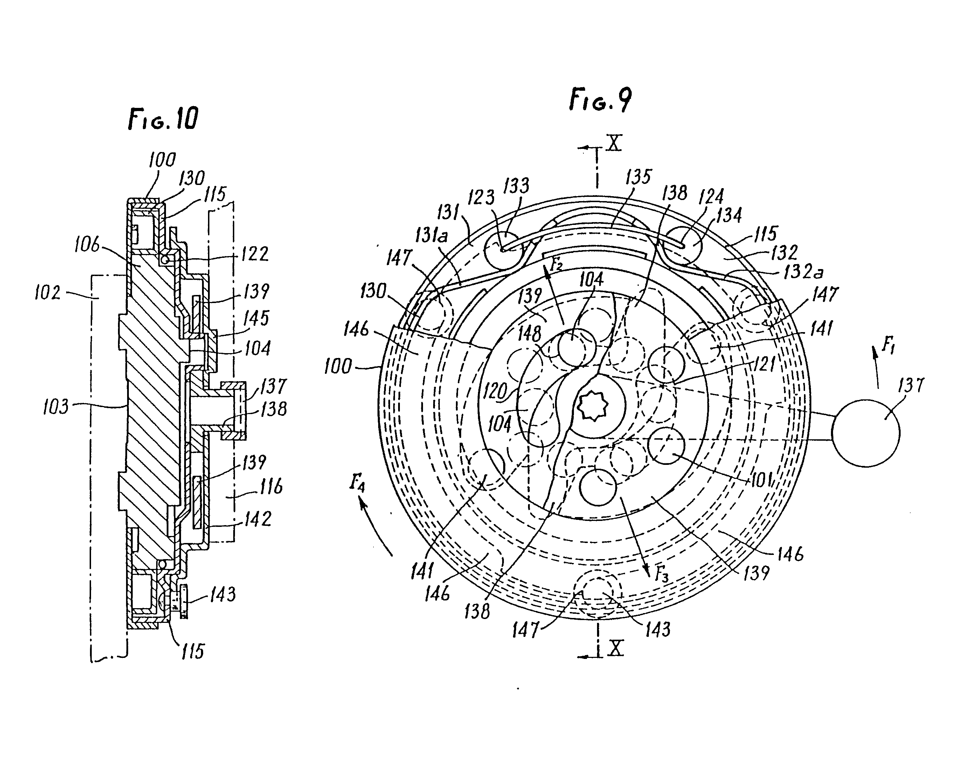

Les figures 7 et 8 concernent le même dispositif de blocage que précité, mais dans celui-ci le basculement n'est pas envisagé puisque cet ensemble est utilisé dans un véhicule à quatre portes. Dans cette réalisation, le mécanisme de blocage rapide doit intervenir lorsqu'au cours

d'une manœuvre de positionnement ou de basculement du dossier, le véhicule est soumis à un choc intempestif produit sur l'avant ou sur l'arrière du véhicule. Les fenêtres arquées (120 et 121 aux fig. 5 et 6) nécessaires au pivotement du dossier sont de ce fait supprimées et remplacées par de simples trous 114 dans lesquels passent des doigts de positionnement 104 sortis du flasque mobile de l'articulation 103 considérée.

Les figures 9 et 10 concernent toujours le même dispositif de blocage par inertie, utilisé sur un dispositif de basculement du dossier pour un véhicule à deux portes mais dont la particularité est de permettre un basculement de sécurité.

Comme cela a déjà été souligné pour les fig. 5 et 6, les galets 133, 134 après un choc violent, peuvent, en absorbant de l'énergie, déformer le boîtier extérieur 115 ainsi que l'ensemble des rampes du boîtier 130. Il peut alors se produire que les passagers utilisant les places arrière du véhicule à deux portes ne puissent pas pousser plus avant le dossier. Un dispositif complémentaire de sécurité adjoint à l'ensemble déjà décrit aux fig. 5 et 6 permet le déverrouillage de l'ensemble et le pivotement rapide du dossier vers l'avant. Comme on peut le voir aux fig. 9 et 10 une action exercée suivant la flèche $F_1$ sur la biellette 137 solidaire d'une double came 138 sollicite deux éléments de blocage 139 qui sont en réaction sur des bossages 104 sortis du boîtier 115. Les deux éléments de blocage 139 pivotent autour de leur axe 141 suivant les flèches $F_2$, $F_3$ et libèrent les bossages 104. Le flasque 142 solidaire du dossier 116 peut alors pivoter vers l'avant et laisser le passage aux passagers qui occupaient les sièges à l'arrière du véhicule. Des points de fixation 145 représentés par des semi-découpes peuvent être réalisés par tous moyens convenables (boulons, vis, soudures) pour relier au dossier 116 le flasque de pivotement rapide 142. Plusieurs pions 143 maintiennent le boîtier 115 sur le flasque 142. Des échancrures 146 permettent le débattement du dossier. Les points de contact 147 limitent le jeu entre les points de retenue réalisés sur les éléments de blocage 139.

La rotation du dossier 116 est obtenue suivant la flèche $F_4$ dans une utilisation normale tant avant un choc avant qu'après un tel choc par le déverrouillage des éléments de blocage 139.

## Revendications

1. Dispositif de blocage rapide d'une articulation montée sur l'armature du dossier du siège en complément de l'articulation de positionnement ou ferrure-moteur qui se compose d'un boîtier extérieur (1) présentant, en son centre, un axe central (11) relié par différents moyens à l'un des côtés de l'armature du dossier du siège, ce boîtier extérieur contenant un deuxième boîtier (6) dans lequel peut être inclus un ressort de rappel (13) du dossier du fait que l'une des extrémités (12) de ce ressort est fixée sur l'axe tournant central (11) et que l'autre extrémité (14) de ce ressort (13) vient en prise, par une partie en U, avec la face inférieure latérale du boîtier (6), caractérisé en ce que ce boîtier (6) en étoile supporte un palonnier (8) aux extrémités duquel sont montés des galets fous (9) présentant une surface extérieure striée, galets placés entre la face extérieure du boîtier (6) en étoile et la face intérieure du boîtier extérieur (1), ces galets (9) étant entraînés par inertie au moment d'un choc par leur propre poids et également par la rotation du boîtier extérieur (1) sous l'action du pivotement du dossier de siège, ce qui provoque le blocage du boîtier extérieur mobile (1) par rapport au boîtier fixe (6) en étoile solidaire de l'assise du siège par pénétration des galets fous de blocage (9) entre les deux boîtiers précités.

2. Dispositif de blocage rapide d'un siège articulé, caractérisé en ce qu'il comporte une coupelle extérieure (100) solidaire de l'armature (116) du dossier par l'intermédiaire d'un boîtier extérieur (115) dans lequel est placé un boîtier conformé (130) contenant un organe de blocage par inertie composé de deux galets (133, 134) à surface extérieure striée reliés par un organe de maintien (135), le boîtier extérieur (115) solidaire de l'armature du dossier pouvant tourner sous l'action d'une ferrure de réglage d'inclinaison (103) et présentant également au moins une ouverture (120, 121 ; 114) coopérant avec un doigt ou bossage (104) solidaire de la ferrure de réglage (103) de l'inclinaison.

3. Dispositif selon la revendication 2, dans lequel, dans le cas d'un basculement rapide du dossier vers l'avant, l'ouverture présente la forme de deux fentes arquées diamétralement opposées (120, 121) dans lesquelles se déplacent les bossages (104) solidaires de la ferrure de réglage et qui assurent une position mémoire.

4. Dispositif selon la revendication 2, caractérisé en ce que, dans le cas où il n'y a pas de basculement rapide du dossier vers l'avant, l'ouverture prend la forme de trous diamétralement opposés (114) dans lesquels viennent se centrer des doigts de positionnement (104) sortis de la ferrure d'articulation.

5. Dispositif selon l'une des revendications 2 ou 3, caractérisé en ce qu'il comprend supplémentairement une biellette (137) solidaire d'une double came (138) portant sur deux éléments de blocage (139) agissant sur des doigts ou bossages (104a).

## Claims

1. Fast blocking mechanism for an articulation mounted on the frame of the seat-back as a complement of the positioning articulation or driving iron fitting member which comprises an outer casing (1) having, in its center, a central spindle (11) connected through various means to one of the sides of the seat-back frame, this outer casing containing a second casing (6) in which can be included a return spring (13) for the seat since one of the ends (12) of this spring is fixed on the rotary central spindle (11) and that the other end (14) of this spring (13) engages, by a U-shaped part, with the lower lateral face of the casing (6), characterized in that this star-shaped casing (6) carries a swing bar (8) at the ends of which are mounted idle rollers (9) having a serrated outer surface, which rollers are placed between the outer face of the star-shaped casing (6) and the inner face of the outer casing (11), these rollers (9) being driven by inertia upon an impact by their own weight and also by the rotation of the outer casing (1) under the pivoting action of the seat-back, which causes blocking of the mobile outer casing (1) with respect to the star-shape fixed casing (6) which is rigidly connected to the seating portion of the seat by penetration of the blocking idle rollers (9) between the two above-mentioned casings.

2. Fast blocking mechanism for an articulated seat, characterized in that it comprises an outer dish (100) rigidly connected to the frame (116) of the seat-back via an outer casing (115) in which is placed a shaped casing (130) containing an inertia blocking member comprising two rollers (133, 134) with a serrated outer surface and connected by a maintaining member (135), the outer casing (115) rigidly connected to the seat-back frame being able to rotate under action of an inclination adjusting fitting iron member (103) and further having at least one opening (120, 121 ; 114) cooperating with a finger or boss (104) rigidly connected to the inclination adjusting fitting iron member (103).

3. Mechanism according to claim 2, wherein, in the case of a rapid tilting motion of the seat-back in a frontward direction, the opening has the shape of two arch-shaped diametrically opposite slots (120, 121) in which are displaceable the bosses (104) which are rigidly connected to the adjusting iron member and which ensure a memory position.

4. Mechanism according to claim 2, characterized in that, in the case where there is no rapid tilting motion of the seat-back in a frontward direction, the opening has the shape of diametrically opposite holes (114) in which come to be centered positioning fingers (104) coming from the articulation iron fitting member.

5. Mechanism according to one of claims 2 or 3, characterized in that it further comprises a small rod (137) which is rigidly connected to a double cam (138) bearing on two blocking elements (139) acting on fingers or bosses (104a).

**Patentansprüche**

1. Schnelle Blockiervorrichtung für ein auf der Armatur der Sitzlehne angeordnetes, das Positionierungsgelenk ergänzendes Gelenk, das aus einem Aussengehäuse (1) besteht, das in seiner Mitte eine zentrale, durch verschiedene Mittel mit einer der Seiten der Armatur der Sitzlehne verbundene Achse (11) aufweist, wobei dieses Aussengehäuse ein zweites Gehäuse (6) enthält, das eine Rückzugfeder (13) der Sitzlehne aufnehmen kann und das ein Ende (12) dieser Feder auf der zentralen, drehbaren Achse (11) festgebunden ist, während das andere Ende (14) dieser Feder (13) über einen U-förmigen Teil in Eingriff mit der unteren seitlichen Fläche des Gehäuses (6) kommt, dadurch gekennzeichnet, dass dieses sternförmige Gehäuse (6) einen Hebel (8) trägt, an dessen Enden Losrollen (9) angeordnet sind, die eine geriefte Aussenfläche aufweisen und zwischen der Aussenseite des sternförmigen Gehäuses (6) und der Innenseite des Aussengehäuses (1) angeordnet sind, wobei diese Rollen (9) aus Trägheit bei einem Stoss durch ihr eigenes Gewicht und auch durch die Drehbewegung des Aussengehäuses (1) infolge der Drehbewegung der Sitzlehne mitgenommen werden, was die Blockierung des beweglichen Aussengehäuses (1) im Verhältnis zum ortsfesten, sternförmigen Gehäuse (6), das mit dem Grundelement des Sitzes fest verbunden ist, infolge des Einrückens der Blockierungs-Losrollen (9) zwischen die beiden Gehäuse bewirkt.

2. Schnelle Blockiervorrichtung für einen gelenkigen Sitz, dadurch gekennzeichnet, dass sie Aussenschale (100) aufweist, die mit der Armatur (116) der Sitzlehne über ein Aussengehäuse (115) fest verbunden ist, in welchem ein geformtes Gehäuse (130) aufgenommen wird, das ein aus Trägheit blockierendes Organ enthält, das durch zwei mit einer gerieften Aussenfläche versehene, durch einen Halterungsorgan (135) verbundene Rollen (133, 134) gebildet ist, wobei das mit der Armatur der Sitzlehne fest verbundene Aussengehäuse (115) sich unter der Wirkung eines die Neigung einstellenden Beschlags (103) drehen kann und mindestens eine Öffnung (120, 121, 114) aufweist, die mit einem Finger oder Vorsprung (104) zusammenwirkt, der mit dem die Neigung einstellenden Beschlag (103) fest verbunden ist.

3. Vorrichtung nach Anspruch 2, dadurch gekennzeichnet, dass die Öffnung im Falle einer schnellen Schwenkbewegung nach vorn zwei bogenförmige, diametral entgegengesetzte Schlitze (120, 121) aufweist, durch welche die Vorsprünge (104), die mit dem Einstellbeschlag fest verbunden sind und eine Speicherstellung gewährleisten, geführt werden.

4. Vorrichtung nach Anspruch 2, dadurch gekennzeichnet, dass die Öffnung im Falle keiner schnellen Schenkbewegung nach vorn zwei diametral entgegengesetzte Löcher (114) aufweist, in welche die aus dem Gelenkbeschlag herausragenden Positionierungsfinger (104) zentral in Eingriff kommen.

5. Vorrichtung nach einem der Ansprüche 2 oder 3, dadurch gekennzeichnet, dass sie zusätzlich eine Pleuelstange (137) aufweist, die mit einer Doppelnocke (138) fest verbunden ist, welche mit zwei Blockierelementen (139) in Verbindung steht, die auf die Finger oder Vorsprünge (104a) einwirken.

Fig:1

Fig:2

*Fig.3*

*Fig.4*

21

M

20

21

21   20

# Fig.6

# Fig.5

Fig.8

Fig.7

0 169 096

FIG. 10

FIG. 9

0 169 096